# EUROPÄISCHE PATENTSCHRIFT

(11) **EP 2 713 489 B1**
(45) Veröffentlichungstag und Bekanntmachung des Hinweises auf die Patenterteilung: **01.01.2020**
(21) Anmeldenummer: 12186322.9
(22) Anmeldetag: 27.09.2012
(51) Int. Cl.: H02M 1/42

(54) **Verfahren für Niedriglastbetrieb eines aktiven PFC-Wandlers mittels Fenstermodulation mit gesteuerter Fensterbreite**
Method for low power operation of an active PFC converters using window modulation with open-loop width control
Procédé de fonctionnement d'un convertisseur PFC actif pendant puissance faible utilisant modulation fenêtre avec commande en boucle ouverte de largeur

(43) Veröffentlichungstag der Anmeldung: 02.04.2014
(73) Patentinhaber: Siemens Aktiengesellschaft, 80333 München (DE)
(72) Erfinder: Reschenauer, Stefan, 2191 Atzelsdorf (AT); Eichhorner, Bernhard, 1210 Wien (AT); Fahrner, Josef, 2870 St. Corona (AT); Königshofer, Roman, 2351 Wiener Neudorf (AT); Schaffer, Johann, 3400 Klosterneuburg (AT)
(74) Vertreter: Maier, Daniel Oliver

(56) Entgegenhaltungen:
- EP-A2- 2 442 434
- US-A1- 2010 156 377
- US-A1- 2011 095 731
- US-A1- 2011 267 856
- US-B1- 7 295 452

## Beschreibung

### Technisches Gebiet

Die Erfindung betrifft ein Verfahren zum Betreiben eines aktiven PFC-Wandlers, der eine Wechselstrom-Eingangsspannung in eine festgelegte Gleichstrom-Ausgangsspannung umwandelt, welche einem angeschlossenen Verbraucher zugeführt wird, wobei der Betrieb des PFC-Wandlers in Abhängigkeit von der Leistungsaufnahme des Verbrauchers erfolgt und bei einer Leistungsaufnahme unter einem vorgegebenen Wert der PFC-Wandler nur während eines Zeitraums der Halbwelle der Eingangsspannung getaktet wird.

Ein aktiver Leistungsfaktorkorrektur-Wandler oder PFC-Wandler (englisch Power Factor Correction oder Power Factor Compensation, abgekürzt PFC) ist eine elektrische oder elektronische Schaltung, welche den sogenannten Leistungsfaktor erhöht, damit dieser in einem gesetzlich vorgegebenen Bereich bleibt. Als Leistungsfaktor bezeichnet man in der Elektrotechnik das Verhältnis vom Betrag der Wirkleistung zur Scheinleistung. Der Leistungsfaktor kann zwischen 0 und 1 liegen. Übliche Kompensationswerte des Leistungsfaktors durch einen PFC-Wandler liegen im Bereich um 0,98.

Diese aktiven PFC-Wandler bestehen in der Regel aus einem Gleichrichter mit direkt nachgeschaltetem Aufwärtswandler, der einen großen Kondensator auf eine Spannung oberhalb der Scheitelspannung der Eingangsspannung (z.B. der Netzwechselspannung) auflädt. Aus dessen Spannung (typisch sind 350-400 V) wird der eigentliche Verbraucher (Schaltnetzteil oder z. B. elektronisches Vorschaltgerät von Leuchtstofflampen) versorgt. Ein Schaltnetzteil oder Schaltnetzgerät ist eine elektronische Baugruppe, die eine unstabilisierte Eingangsspannung (Gleich- oder Wechselspannung) in eine Gleichspannung eines anderen Niveaus umwandelt.

Aktive PFC-Wandler sind somit aktive Schaltungen zur Reduzierung von Oberwellen. Der mit dem PFC-Wandler versehene Verbraucher, etwa eben ein Schaltnetzgerät, hat dann eine annähernd sinusförmige Stromaufnahme, weil der PFC-Wandler einen sinusförmigen und daher oberwellenfreien Strom aus der Quelle, in der Regel die Netzspannung, zieht und somit die eingangsseitige Quelle frei von Störungen hält.

### Stand der Technik

Derartige Schaltungen sind aus dem Stand der Technik bekannt, siehe etwa die DE 10 2010 006 430 A1.

Abgesehen von den unterschiedlichen Topologien von PFC-Wandlern haben alle den Nachteil einer höheren Standby- oder Leerlauf-Leistung, da in den PFC-Wandlern permanent Halbleiter geschaltet werden, auch wenn vom Verbraucher kein Strom entnommen wird.

Eine Möglichkeit zur Reduzierung der Standby-Verluste ist die Reduzierung der Zeitfenster, in welchen geschaltet wird. Hier wird bei Vollast, also wenn der Verbraucher eine vordefinierte maximale Leistung entnimmt, konstant bzw. kontinuierlich geschaltet, es bleibt also der PFC-Wandler über die ganze Periode der Sinuswelle eingeschaltet (=getaktet). Verringert sich die Last, wird auch das Zeitfenster reduziert. Bei Niedriglast, wenn der Verbraucher wenig Leistung entnimmt, wird nur mehr am Scheitelpunkt der Sinus-Halbwelle getaktet, der PFC-Wandler ist also nur während eines Zeitraums, welcher die Periodendauer des Scheitelpunkts umfasst, eingeschaltet, während er bis zum Erreichen des nächsten Scheitelpunkts bei der nächsten Sinus-Halbwelle ausgeschaltet bleibt.

Mit dieser Lösung kann der Wirkungsgrad des PFC-Wandlers bei niedrigen Leistungen gegenüber der kontinuierlichen Schaltung erhöht werden. Jedoch entstehen bei Teil- oder Niedriglast wieder Oberwellen. Es wird aufgrund des hohen (Spitzen)Stroms auch bei Niedriglast ein akustisches Geräusch erzeugt.

Die DE 10 2008 057 333 A1 zeigt eine PFC-Schaltung, die bei niedriger Leistungsaufnahme des Lastkreises nur während Zeitdauern betrieben wird, in denen die Netzspannungsamplitude hoch und vorzugsweise größer als ein direkt oder indirekt gegebener Schwellwert ist.

Verschiedene Ausführungen eines Schaltnetzteils mit Leistungsfaktorkorrektur sind aus der EP 2 442 434 A2 bekannt.

Ein System und ein Verfahren zur Leistungsfaktorkorrektur mit einer verbesserten Leistungsmessung ist in der US 2010/156377 A1 angegeben.

Eine aktive PFC-Schaltung ist aus der US 7 295 452 B1 bekannt. Diese wird in der Weise angesteuert, dass ein durchschnittlicher Spulenstrom der Wellenform einer gleichgerichteten Eingangsspannung folgt.

Die US 2011/267856 A1 offenbart einen PFC-Wandler, bei dem während einer Eingangsspannungs-Halbwelle ein oder mehrere Zeitfenster vorgegeben sind. Dabei taktet der PFC-Wandler nur innerhalb dieser Zeitfenster.

Die US 2011/095731 A1 beschreibt einen PFC-Wandler, welcher abhängig von der Leistungsaufnahme einer angeschlossenen Last mit unterschiedlichen Betriebsmodi betrieben wird. Bei Teil- oder Volllast ist eine PWM-Ansteuerung eines Schalters während einer ganzen Eingangsspannungs-Halbwelle freigeschaltet. In einem Standby-Mode, wenn eine zur Last proportionale Steuerspannung unter einen Grenzwert sinkt, erfolgt die PWM-Ansteuerung nur mehr in einem Teilbereich einer Eingangsspannungs-Halbwelle.

### Darstellung der Erfindung

Es ist eine Aufgabe der vorliegenden Erfindung, ein Verfahren zum Betreiben eines aktiven PFC-Wandlers zur Verfügung zu stellen, welches den Spitzenstrom und den Standby-Verbrauch bei Niedriglast weiter reduziert.

Diese Aufgabe wird durch ein Verfahren mit den Merkmalen des Patentanspruchs 1 gelöst. Vorteilhafte Ausgestaltungen der Erfindung sind in den abhängigen Ansprüchen definiert.

Gemäß Anspruch 1 ist ein Verfahren vorgesehen, wo bei einer Leistungsaufnahme über dem vorgegebenen Wert der PFC-Wandler kontinuierlich getaktet wird, wobei der Ausgangsstrom auf den der Leistungsaufnahme entsprechenden Wert geregelt wird, während bei einer Leistungsaufnahme unter dem vorgegebenen Wert der PFC-Wandler nicht stromgeregelt, sondern nur während einem, zur Leistungsaufnahme proportionalen Zeitraum mit konstantem Tastverhältnis getaktet wird.

Über dem vorgegebenen Wert der Leistungsaufnahme arbeitet der Verbraucher im Volllast- oder Teillastbetrieb, unter dem vorgegebenen Wert der Leistungsaufnahme arbeitet der Verbraucher im Niedriglast-Betrieb.

Dabei entspricht der erfindungsgemäß vorgegebene Wert der Leistungsaufnahme, der die Bereiche Volllast und Teillast (kontinuierlicher Betrieb) einerseits und Niedriglast (Betrieb im Zeitfenster) andererseits voneinander trennt, ca. 10-20% der Nennleistung. Dieser Wert ist ebenfalls abhängig von der zu verwendenden Oberwellen-Norm bzw. Verfahren zur Bestimmung des Wirkungsgrades, insbesondere unter Berücksichtigung der Leerlauf/Standby Verluste.

Der erfindungsgemäße Zeitraum, für den der PFC-Wandler im Fall einer Leistungsaufnahme unter dem vorgegebenen Wert (bei Niedriglast) getaktet ist, ist insbesondere direkt proportional zur Leistungsaufnahme. Der Zeitraum entspräche bei maximal zulässiger Leistungsaufnahme bei Niedriglast der gesamten Halbwelle der Eingangsspannung und wäre bei fehlender Leistungsaufnahme Null.

Vorteilhafter Weise ist bei einer Leistungsaufnahme unter dem vorgegebenen Wert der Zeitraum der Taktung symmetrisch zur Spannungsamplitude der Halbwellen der Eingangsspannung. Es wäre jedoch auch denkbar, dass der Zeitraum mehrheitlich vor oder nach dem Zeitpunkt des Erreichens der Spannungsamplitude liegt.

Um die Standby-Verluste weiter zu begrenzen, kann vorgesehen sein, dass bei einer Leistungsaufnahme unter dem vorgegebenen Wert die Taktung nur bei einem festgelegten Vielfachen von Halbwellen erfolgt. Der PFC-Wandler könnte also etwa nur im entsprechenden Zeitraum jeder zweiten, dritten oder vierten Halbwelle getaktet werden.

Bei Vorliegen einer Leistungsaufnahme über dem vorgegebenen Wert (also bei Teil- oder Vollast) kann die Regelung des Ausgangsstroms am einfachsten durch Änderung des Tastverhältnisses des PFC-Wandlers erfolgen.

Das Tastverhältnis gibt für eine periodische Folge von Impulsen das Verhältnis der Impulsdauer zur Impulsperiodendauer an. Das Tastverhältnis wird als dimensionslose Verhältniszahl mit einem Wert von 0 bis 1 oder 0 bis 100 % angegeben. Im gegenständlichen Fall gibt das Tastverhältnis an, wie lange der Halbleiterschalter des PFC-Wandlers eingeschaltet oder geschlossen ist im Verhältnis zur Dauer zwischen zwei Einschaltzeitpunkten. Beim Schließen des Schalters fällt die Eingangsspannung an einer Spule des PFC-Wandlers ab, beim Öffnen des Schalters fließt der Strom in den Ladekondensator des PFC-Wandlers. Die Taktfrequenz des PFC-Wandlers ist der Kehrwert der Impulsperiodendauer und liegt üblicher Weise im Bereich von 100 kHz, liegt also stets um einige Zehnerpotenzen über der Frequenz der Eingangsspannung, die bei Netzspannung im Bereich bis zu mehreren hundert Hertz, insbesondere um 50 Hz, liegt.

Wird das Tastverhältnis vergrößert, so erhöht sich bei gleichbleibender Ausgangsspannung der Ausgangstrom des PFC-Wandlers und damit die für den Verbraucher zur Verfügung stehende Leistung. Bei sinkender Leistung wird das Tastverhältnis verkleinert, um den Ausgangstrom entsprechend zu verringern.

Insofern kann vorgesehen sein, dass das Erreichen eines minimalen Tastverhältnisses das Erreichen eines vorgegebenen Werts der Leistungsaufnahme (Niedriglast) darstellt. Mit anderen Worten kann das Erreichen der Niedriglast durch das Erreichen des entsprechenden Tastverhältnisses festgestellt werden und damit die Regelung des PFC-Wandlers umgestellt werden, von Ausgangsstromregelung auf die Regelung auf einen bestimmten Zeitraum der Taktung des PFC-Wandlers. Dabei wird das erreichte minimale Tastverhältnis im gesamten Bereich der Niedriglast beibehalten.

Das Erreichen eines minimalen Tastverhältnisses kann etwa durch eine Komparatorschaltung festgestellt werden, welche dann die Umschaltung von kontinuierlicher Taktung (Teil- und Volllastbetrieb) auf nicht kontinuierliche Taktung (Niedriglastbetrieb) auslöst.

Mit dem erfindungsgemäßen Verfahren werden ein kontinuierliches Verfahren (kontinuierlich taktender PFC-Wandler) für den Teil- und Volllastbetrieb mit einem nicht kontinuierlichen Verfahren (nicht kontinuierlich taktender PFC-Wandler) für den Niedriglastbetrieb kombiniert. Es zeichnet sich durch geringe Verluste im Niedriglastbetrieb und durch gute Unterdrückung von Oberwellen im Teil- und Volllastbetrieb aus sowie durch geringe Geräuschentwicklung.

Etwaige Instabilitäten durch die gleichzeitige Verwendung von zwei oder mehreren Reglern können nicht auftreten, da immer nur ein Regler im Einsatz ist: einer für den Ausgangsstrom bei Teil- und Volllastbetrieb und einer für den Zeitraum der Taktung im Niedriglastbereich.

Eine Vorrichtung ist zur Durchführung des Verfahrens eingerichtet und kann umfassen:
- einen PWM (Pulsweitenmodulation)-Controller ,
- einen Regler zum Erzeugen eines Regelsignals, das sowohl einem Komparator als auch dem PWM-Controller zuführbar ist,
- einen Signalgenerator zum Erzeugen eines zu den Halbwellen der Eingangsspannung synchronen Dreieckssignals,
- einen Komparator zum Vergleichen des Dreiecksignals mit dem Regelsignal,
- einen Aufwärtswandler mit einem Schalter, wobei der Schalter in Abhängigkeit vom Ausgangssignal des Komparators und des PWM-Controllers betätigbar ist.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Figur 1 ein Diagramm der elektrischen Leistung in Abhängigkeit von der Zeit mit unterschiedlichen Schaltfenstern nach dem Stand der Technik,
Figur 2 ein Diagramm der elektrischen Spannung in Abhängigkeit von der Zeit für einen Verbraucher unter Volllast,
Figur 3 ein Diagramm der elektrischen Spannung in Abhängigkeit von der Zeit für einen Verbraucher unter Teillast,
Figur 4 ein Diagramm der elektrischen Spannung in Abhängigkeit von der Zeit für einen Verbraucher unter Niedriglast,
Figur 5 eine Darstellung der Betriebsbereiche in Abhängigkeit der Betriebsfälle, und
Figur 6 ein Blockdiagramm einer erfindungsgemäßen Schaltung.

### Ausführung der Erfindung

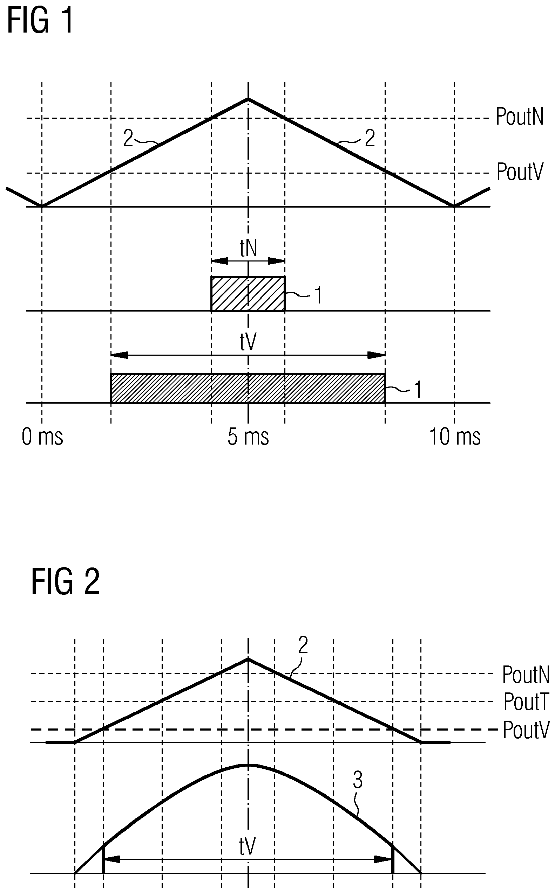

Figur 1 zeigt ein Diagramm der elektrischen Leistung in Abhängigkeit von der Zeit mit unterschiedlichen Schaltfenstern nach dem Stand der Technik. Auf der waagrechten Zeitachse ist die Zeitdauer einer Netzhalbwelle der Netz-Eingangsspannung aufgetragen, die bei einer Netzfrequenz von 50 Hz einer Zeitdauer von 10 ms entspricht. Die gewünschte Ausgangsleistung des PFC-Wandlers ist jeweils durch eine waagrechte Linie dargestellt, einmal für Volllast PoutV, was etwa 90% der Nennleistung des Verbrauchers entspricht, und einmal für Niedriglast PoutN, was etwa 10% der Nennleistung des Verbrauchers entspricht. Die Linien 2 geben ein mit der Eingangsspannung (bzw. der gleichgerichteten Netzspannung) synchrones Dreieckssignal wieder, welches mit dem Regelsignal verglichen wird. Dort, wo die Linien 2 die Linie der gewünschten Ausgangsleistung schneiden, wird der Anfangs-bzw. Endpunkt des Zeitraums 1 der Taktung des PFC-Wandlers festgelegt, man spricht auch von der Schaltzeit oder dem Schaltfenster. Bei Volllast beträgt die Schaltzeit somit etwa 7 ms, bei Niedriglast nur 2 ms. Das Schaltfenster ist dabei symmetrisch zur Amplitude der Eingangsspannung angeordnet.

In den Fig. 2 bis 4 ist der Verlauf der elektrischen Eingangsspannung des PFC-Wandlers über die Zeit für eine Netzhalbwelle 3 dargestellt, der Zeitraum entspricht also jenem aus Fig. 1, ebenso die Darstellung der Linie 2 und der verschiedenen Lastfälle, Volllast PoutV und Niedriglast PoutN. Der Fall der Teillast PouT, welcher hier bei etwa 50% der Nennleistung des Verbrauchers liegt, ist ebenfalls eingezeichnet. Der jeweilige Lastfall ist in den verschiedenen Fig. dick strichliert eingezeichnet.

Entsprechend den Schnittpunkten zwischen Linie 2 und der gewünschten Ausgangsleistung wird gemäß Stand der Technik die Schaltzeit des PFC-Wandlers für den jeweiligen Lastfall festgelegt.

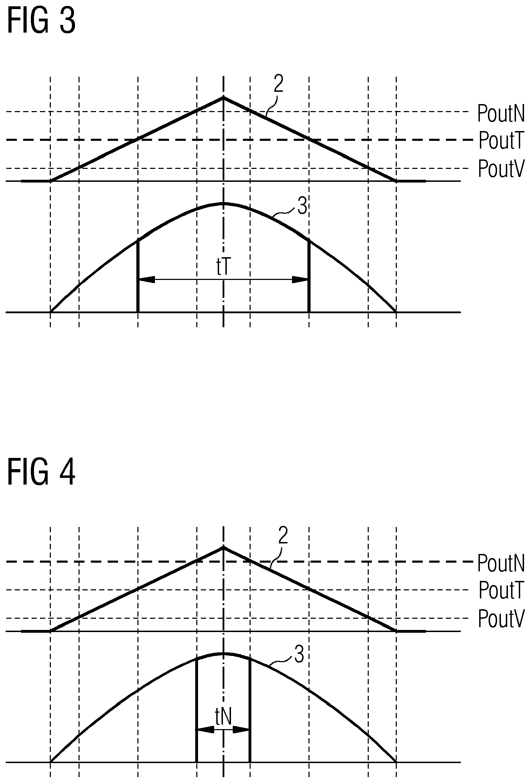

Das erfindungsgemäße Verfahren deckt sich nur bezüglich Fig. 4 mit jenem des Stands der Technik: nur bei Niedriglast wird der PFC-Wandler während eines Zeitraums betrieben bzw. getaktet, das kleiner als die Dauer einer Netzhalbwelle ist. Der Zeitraum wird dabei entsprechend der Schnittpunkte der Linie 2 mit jener der Niedriglast PoutN bestimmt.

Der Übergang von Teillast zu Niedriglast wird mittels vorher festgelegten minimalem Tastverhältnis bestimmt.

Sinkt die Leistungsaufnahme des Verbrauchers noch weiter unter den in Fig. 4 eingezeichneten Wert, so wird auch der Zeitraum tN der Taktung weiter reduziert, das Schaltfenster also verkleinert.

Beim erfindungsgemäßen Verfahren würde also der PFC-Wandler bei Voll- und Teillast über die gesamte Netzhalbwelle 3 in den Fig. 2 und 3 getaktet sein, also kontinuierlich betrieben werden, und nicht wie beim Stand der Technik nur während einer begrenzten Schaltzeit tT, tV. In Fig. 2 etwa müsste erfindungsgemäß also während der kompletten Halbwelle getaktet werden, die dicke Linie würde also über die komplette Netzhalbwelle 3 verlaufen.

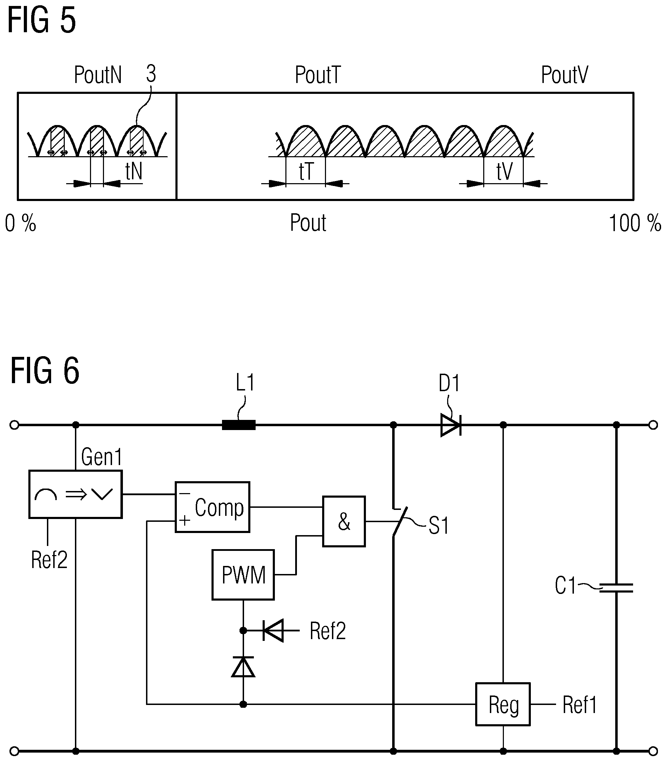

In Fig. 5 ist auf der waagrechten Achse die Ausgangsleistung Pout für das erfindungsgemäße Verfahren aufgetragen. Darüber ist der zeitliche Verlauf der Netzspannung in Form mehrerer Netzhalbwellen 3 dargestellt, wobei der Zeitraum der Taktung jeweils grau unterlegt ist.

Bei Niedriglast PoutN wird jeweils nur während eines Zeitraums tN getaktet, der kürzer als die Periode der Netzhalbwelle 3 ist. Der Zeitraum tN ist weiters variabel, was durch die kleinen Doppelpfeile am Beginn und am Ende des Zeitraums tN symbolisiert wird.

Bei Teillast PoutT oder Volllast PoutV wird kontinuierlich getaktet, der Zeitraum der Taktung tZ, tV entspricht jeweils der ganzen Periode der Netzhalbwelle 3.

In Fig. 6 geben L1, D1, C1 und S1 die Prinzipschaltung eines Hochsetzers (Aufwärtswandlers) wieder. An den Klemmen links wird die gleichgerichtete Netzspannung angelegt. An den Klemmen rechts erhält man die hochgesetzte Ausgangsspannung. Der Regler Reg liefert ein Regelsignal, welches über eine Diode D2 dem PWM-Controller PWM und dem Komparator Comp zugeführt wird. Mittels Referenzsignal Ref1 wird die Ausgangsspannung bestimmt. Das Referenzsignal Ref2 legt das minimale Tastverhältnis fest.

Der Signalgenerator Gen1 erzeugt aus den Netzhalbwellen 3 ein dazu synchrones Dreieckssignal 2 mit definierter Amplitude. Im Niedriglast-Betrieb ist das Regelsignal kleiner als das Referenzsignal Ref2 (fixes Tastverhältnis) und ebenfalls kleiner als die Amplitude des von Signalgenerator Gen1 erzeugten Dreieckssignals 2. In diesem Fall wird das Regelsignal mit dem Dreieckssignal 2 mittels Komparator Comp verglichen. Je nach verbrauchter Leistung ändert sich somit die Größe des Zeitfensters, in dem der Schalter S1 getaktet wird. Im Teil- und Volllastbetrieb ist das Regelsignal grösser als das Referenzsignal Ref2 und grösser als die Amplitude des erzeugten Dreiecksignals 2. In diesen Betrieb regelt der PWM-Controller PWM mittels Regelsignal das Tastverhältnis für den Schalter S1.

### Bezugszeichenliste:

- 1: Zeitraum der Taktung (=Schaltzeit oder Schaltfenster)
- 2: mit gleichgerichteter Netzspannung synchrones Dreieckssignal
- 3: Netzhalbwelle
- C1: Kondensator
- Comp: Komparator
- D1: Freilaufdiode
- D2: Diode
- Gen1: Signalgenerator
- L1: Induktivität
- PoutN: Ausgangsleistung bei Niedriglast
- PoutT: Ausgangsleistung bei Teillast
- PoutV: Ausgangsleistung bei Volllast
- PWM: PWM-Controller
- Ref1: Referenzsignal zur Festlegung der Ausgangsspannung
- Ref2: Referenzsignal zur Festlegung des minimalen Tastverhältnisses
- Reg: Regler
- S1: Schalter
- tN: Zeitraum der Taktung (Schaltzeit) bei Niedriglast
- tT: Zeitraum der Taktung (Schaltzeit) bei Teillast
- tV: Zeitraum der Taktung (Schaltzeit) bei Volllast

## Patentansprüche

1. Verfahren zum Betreiben eines aktiven PFC-Wandlers, der eine Wechselstrom-Eingangsspannung in eine festgelegte Gleichstrom-Ausgangsspannung umwandelt, welche einem angeschlossenen Verbraucher zugeführt wird, wobei der Betrieb des PFC-Wandlers in Abhängigkeit von der Leistungsaufnahme des Verbrauchers erfolgt und bei einer Leistungsaufnahme unter einem vorgegebenen Wert der PFC-Wandler nur während eines Zeitraums der Halbwelle (3) der Eingangsspannung getaktet wird, **dadurch gekennzeichnet, dass** bei einer Leistungsaufnahme über dem vorgegebenen Wert der PFC-Wandler kontinuierlich getaktet wird, wobei der Ausgangsstrom auf den der Leistungsaufnahme entsprechenden Wert geregelt wird, während bei einer Leistungsaufnahme unter dem vorgegebenen Wert der PFC-Wandler nicht stromgeregelt, sondern nur während einem, zur Leistungsaufnahme proportionalen Zeitraum (tN) getaktet wird, wobei ein Erreichen eines minimalen Tastverhältnisses ein Erreichen des vorgegebenen Werts der Leistungsaufnahme darstellt und das erreichte minimale Tastverhältnis im gesamten Bereich einer Leistungsaufnahme unter dem vorgegebenen Wert beibehalten wird.

2. Verfahren nach Anspruch 1, **dadurch gekennzeichnet, dass** der vorgegebene Wert der Leistungsaufnahme 10-20% der Nennleistung des Verbrauchers entspricht.

3. Verfahren nach Anspruch 1 oder 2, **dadurch gekennzeichnet, dass** der Zeitraum (tN) direkt proportional zur Leistungsaufnahme ist und bei maximal zulässiger Leistungsaufnahme der gesamten Halbwelle (3) der Eingangsspannung entspräche und bei fehlender Leistungsaufnahme Null ist.

4. Verfahren nach einem der Ansprüche 1 bis 3, **dadurch gekennzeichnet, dass** bei einer Leistungsaufnahme unter dem vorgegebenen Wert der Zeitraum (tN) der Taktung symmetrisch zur Spannungsamplitude der Halbwellen (3) der Eingangsspannung ist.

5. Verfahren nach einem der Ansprüche 1 bis 4, **dadurch gekennzeichnet, dass** bei einer Leistungsaufnahme unter dem vorgegebenen Wert die Taktung nur bei einem festgelegten Vielfachen von Halbwellen (3) erfolgt.

6. Verfahren nach einem der Ansprüche 1 bis 5, **dadurch gekennzeichnet, dass** die Regelung des Ausgangsstroms bei einer Leistungsaufnahme über dem vorgegebenen Wert durch Änderung des Tastverhältnisses des PFC-Wandlers erfolgt.

7. Verfahren nach Anspruch 1, **dadurch gekennzeichnet, dass** das Erreichen eines minimalen Tastverhältnisses durch eine Komparatorschaltung festgestellt wird.

8. Vorrichtung, welche zur Durchführung des Verfahrens nach einem der Ansprüche 1 bis 7 eingerichtet ist, wobei diese umfasst:
- einen PWM-Controller (PWM),
- einen Regler (Reg) zum Erzeugen eines Regelsignals, das sowohl einem Komparator (Comp) als auch dem PWM-Controller (PWM) zuführbar ist,
- einen Signalgenerator (Gen1) zum Erzeugen eines zu den Halbwellen der Eingangsspannung synchronen Dreieckssignals (2),
- einen Komparator (Comp) zum Vergleichen des Dreiecksignals (2) mit dem Regelsignal,
- einen Aufwärtswandler mit einem Schalter (S1), wobei der Schalter (S1) in Abhängigkeit vom Ausgangssignal des Komparators (Comp) und des PWM-Controllers (PWM) betätigbar ist.

## Claims

1. Method for operating an active PFC converter which converts an AC input voltage to a specified DC output voltage which is supplied to a connected load, wherein the operation of the PFC converter is a function of the power consumption of the load and at a power consumption below a predetermined value the PFC converter is clocked only during a period of the half-wave (3) of the input voltage, **characterised in that** at a power consumption above the predetermined value the PFC converter is clocked continuously, wherein the output current is controlled to the value corresponding to the power consumption, while at a power consumption below the predetermined value the PFC converter is not current-controlled, but is clocked only during a period (tN) proportional to the power consumption, wherein an achievement of a minimum pulse duty factor represents an achievement of the predetermined value of the power consumption and the achieved minimum pulse duty factor is kept below the predetermined value in the entire range of a power consumption.

2. Method according to claim 1, **characterised in that** the predetermined value of the power consumption corresponds to 10-20% of the rated power of the load.

3. Method according to claim 1 or 2, **characterised in that** the period (tN) is directly proportional to the power consumption and at maximum permissible power consumption of the entire half-wave (3) would correspond to the input voltage and in the absence of power consumption is zero.

4. Method according to one of claims 1 to 3, **characterised in that** at a power consumption below the predetermined value the period (tN) of the clocking is symmetrical to the voltage amplitude of the half-waves (3) of the input voltage.

5. Method according to one of claims 1 to 4, **characterised in that** at a power consumption below the predetermined value the clocking takes place only at a fixed multiple of half-waves (3).

6. Method according to one of claims 1 to 5, **characterised in that** the regulation of the output current takes place at a power consumption above the predetermined value by changing the pulse duty factor of the PFC converter.

7. Method according to claim 1, **characterised in that** the achievement of a minimum pulse duty factor is determined by a comparator circuit.

8. Device which is designed to perform the method according to one of claims 1 to 7, wherein it comprises:
- a PWM controller (PWM),
- a regulator (Reg) for generating a control signal which can be supplied both to a comparator (Comp) and to the PWM controller (PWM),
- a signal generator (Gen1) for generating a triangular signal (2) which is synchronous to the half-waves of the input voltage,
- a comparator (Comp) for comparing the triangular signal (2) with the control signal,
- a step-up converter with a switch (S1), wherein the switch (S1) can be actuated as a function of the output signal of the comparator (Comp) and of the PWM controller (PWM).

## Revendications

1. Procédé de fonctionnement d'un convertisseur PFC actif qui convertit une tension d'entrée en courant alternatif en une tension de sortie en courant continu déterminée qui est amenée vers un consommateur raccordé, dans lequel le fonctionnement du convertisseur PFC s'effectue en fonction de la puissance absorbée du consommateur et est synchronisé pour une puissance absorbée à une valeur prédéfinie du convertisseur PFC uniquement pendant une durée de la demi-onde (3) de la tension d'entrée, **caractérisé en ce que** pour une puissance absorbée au-dessus de la valeur prédéfinie, le convertisseur PFC est synchronisé en continu, dans lequel le courant de départ est régulé sur la valeur correspondant à la puissance absorbée, tandis que pour une puissance absorbée en-dessous de la valeur prédéfinie, le convertisseur PFC n'est pas régulé en courant, mais est synchronisé seulement pendant une durée (tN) proportionnelle à la puissance absorbée, dans lequel une obtention d'un facteur de durée minimal représente une obtention de la valeur prédéfinie de la puissance absorbée et le facteur de durée minimal atteint est maintenu sur toute la plage d'une puissance absorbée en-dessous de la valeur définie.

2. Procédé selon la revendication 1, **caractérisé en ce que** la valeur prédéfinie de la puissance absorbée correspond à 10-20 % de la puissance nominale du consommateur.

3. Procédé selon la revendication 1 ou 2, **caractérisé en ce que** la durée (tN) est directement proportionnelle à la puissance absorbée, et pour une puissance absorbée maximale autorisée correspondrait à la totalité de la demi-onde (3) de la tension d'entrée et est de zéro lorsque la puissance absorbée est absente.

4. Procédé selon l'une des revendications 1 à 3, **caractérisé en ce que** pour une puissance absorbée en-dessous de la valeur prédéfinie, la durée (tN) de la synchronisation est symétrique à l'amplitude de tension de la demi-onde (3) de la tension d'entrée.

5. Procédé selon l'une des revendications 1 à 4, **caractérisé en ce que** pour une puissance absorbée en-dessous de la valeur prédéfinie, la synchronisation ne s'effectue qu'à un multiple déterminé de demi-ondes (3).

6. Procédé selon l'une des revendications 1 à 5, **caractérisé en ce que** la régulation du courant de départ pour une puissance absorbée au-dessus de la valeur prédéfinie s'effectue par modification du facteur de durée du convertisseur PFC.

7. Procédé selon la revendication 1, **caractérisé en ce que** l'obtention d'un facteur de durée minimal est déterminé par un circuit comparateur.

8. Dispositif qui est agencé pour exécuter le procédé selon l'une des revendications 1 à 7, dans lequel celui-ci comprend :
- une commande PWM (PWM),
- un régulateur (Reg) pour produire un signal de régulation qui peut être envoyé aussi bien à un comparateur (Comp) qu'à la commande PWM (PWM),
- un générateur de signal (Gen1) pour produire un signal triangulaire (2) synchrone par rapport aux demi-ondes de la tension d'entrée,
- un comparateur (Comp) pour comparer le signal triangulaire (2) avec le signal de régulation,
- un convertisseur-élévateur avec un commutateur (S1), dans lequel le commutateur (S1) peut être actionné en fonction du signal de départ du comparateur (Comp) et de la commande PWM (PWM) .
